Europäisches Patentamt

European Patent Office

Office européen des brevets

(19)

(11) EP 1 552 918 A1

(12) EUROPEAN PATENT APPLICATION
published in accordance with Art. 158(3) EPC

(43) Date of publication:
13.07.2005 Bulletin 2005/28

(51) Int Cl.⁷: **B32B 5/18**, G09F 3/00

(21) Application number: 03765332.6

(22) Date of filing: 18.07.2003

(86) International application number:
PCT/JP2003/009183

(87) International publication number:
WO 2004/009343 (29.01.2004 Gazette 2004/05)

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 18.07.2002 JP 2002209128
27.12.2002 JP 2002379715

(71) Applicant: **Yupo Corporation**
**Tokyo 101-0062 (JP)**

(72) Inventors:
• **TAKAHASHI, Tomotsugu, c/o Yupo Corporation**
**Tokyo 101-0062 (JP)**
• **UEDA, Takahiko, c/o Yupo Corporation**
**Kashima-gun, Ibaraki 314-0102 (JP)**
• **KOIKE, Hiroshi, c/o Yupo Corporation**
**Kashima-gun, Ibaraki 314-0102 (JP)**

(74) Representative: **Zimmermann, Gerd Heinrich et al**
**Zimmermann & Partner,**
**P.O. Box 33 09 20**
**80069 München (DE)**

(54) **GLOSSY FILM**

(57) An object of the present invention is to provide a glossy film which can be deformed or peeled with a small force without requiring any special working for starting peeling to allow easy visual recognition. The present invention is a glossy film containing a base layer (A) which contains a thermoplastic resin and having a thickness of 12 μm or more when compressed at a load of 32 kgf/cm² in the thickness direction and a porosity of from 10 to 60% and a gloss layer (C). The present invention is also a glossy film comprising a film (I) containing a base layer (A') which contains a thermoplastic resin and an easily peelable layer (B) having a peel strength of from 5 to 150 g/cm width and a gloss layer (C) provided on at least one surface of the film (I).

EP 1 552 918 A1

Printed by Jouve, 75001 PARIS (FR)

# EP 1 552 918 A1

**Description**

<Technical Field>

The present invention relates to a glossy film which is useful as a substrate for label such as high price certification label, unpacking preventive label, content repacking preventive label, re-covering preventive label and alteration preventive label and allows the label comprising the film of the present invention to show wrinkle on the gloss layer when peeled off after sticking so that peeling can be definitely recognized visually and thus is useful for prevention of re-covering.

In particular, the glossy film of the present invention, if it has an easily peelable layer (B) provided thereon, can be easily peeled in the interior thereof to disable recovery or re-sticking. Thus, the glossy film of the present invention is useful as a substrate for a delivery slip capable of being peeled leaving no paste behind, a secret seal for a postcard or a passbook, an application seal and a coupon.

<Background Art>

A re-covering preventive adhesive label which can be easily found to be re-stuck after peeling or cannot be re-stuck after peeling has been desired and put into practical use. For example, JP-A-2000-194265 discloses that by combining an adhesive layer and a hologram layer in a plurality of forms such that the adhesive strength is partially changed, the hologram layer can be partly left behind on the adherend with the adhesive layer when the label is peeled off the adherend, making it possible to prevent re-covering.

Further, JP-A-2000-284673 discloses that a label having a hologram layer is notched to assure that the hologram layer can be destroyed when the label is peeled.

However, these adhesive labels were disadvantageous in that they have a complicated structure and an increased production cost.

JP-A-8-99377 discloses a method of producing a re-covering preventive label satisfying the relationship c < a < b wherein the force required to peel a first layer off a second layer with a peeling agent is a, the adhesive strength of an adhesive layer to an adherend is b, and the force required to peel a peelable sheet off the adhesive layer is c. The method comprises (a) a step of forming the adhesive layer on the peelable sheet, (b) a step of laminating a peeling agent layer containing wax on one main surface of the first layer, and (c) a step of laminating the first layer on the second layer in such an arrangement that laminated surfaces thereof come in contact with each other. However, the disadvantage of this production method is that it is complicated and if a pulp paper is used as the surface material for the first layer, the first layer exhibits a deteriorated water resistance. Thus, when in contact with water, the label can easily break and be peeled off the adherend substrate.

An object of the present invention is to solve these problems of the prior art technique and provide a re-covering preventive film having a simple structure and excellent properties. In other words, the present invention provides a film which exhibits an excellent water resistance as a substrate for re-covering preventive label, etc. and requires no special processing for starting destruction.

<Disclosure of the Invention>

The present invention concerns a glossy film comprising: a base layer (A) containing a thermoplastic resin and having a thickness of 12 $\mu$m or more when compressed at a load of 32 kgf/cm$^2$ in the thickness direction and a porosity of from 10 to 60%; and a gloss layer (C).

In this case, the opacity of the base layer (A) is preferably from 60 to 100%, the thickness of the base layer (A) is preferably from 20 to 500 $\mu$m, and the base layer (A) preferably has a multi-layer structure. Furthermore, the base layer (A) preferably comprises a layer which is stretched in at least one axial direction. The base layer (A) preferably comprises one or more thermoplastic resins of polyolefin-based resin and polyester-based resin.

The present invention also concerns a glossy film comprising a film (I) containing a base layer (A') made of a thermoplastic resin and an easily peelable layer (B) having a peel strength of from 5 to 150 g/cm width; and a gloss layer (C), wherein the gloss layer (C) is provided on at least one surface of the film (I).

In this case, the base layer (A') preferably has the same configuration as that of the aforementioned base layer (A), and the easily peelable layer (B) preferably comprises at least one of a finely divided inorganic powder and an organic filler and a thermoplastic resin incorporated therein in an amount of from 10 to 80% by weight and from 20 to 90% by weight, respectively. The opacity of the film (I) is preferably from 60 to 100%, the thickness of the base layer (A') is preferably from 20 to 500 $\mu$m, the thickness of the easily peelable layer (B) is preferably from 0.1 to 10 $\mu$m, and the base layer (A') and the easily peelable layer (B) are preferably stretched in at least one axial direction after lamination. Furthermore, the easily peelable layer (B) may be provided on the base layer (A') by a coating method.

It is also preferred that the base layer (A') have a multi-layer structure comprising a layer (A'b) provided on the side thereof in contact with the easily peelable layer (B) and a layer (A'o) provided on the side thereof opposite the easily peelable layer (B). The layer (A'b) comprise at least one of a finely divided inorganic powder and an organic filler and a thermoplastic resin incorporated therein in an amount of from 2 to 60% by weight and from 40 to 98% by weight, respectively. The layer (A'o) comprises a thermoplastic resin incorporated therein in an amount of from 20 to 100% by weight, and the content of the finely divided inorganic powder and organic filler in the layer (A'b) is 8% by weight less than that of the easily peelable layer (B).

It is further preferred that the gloss layer (C) be formed by one or more of direct vacuum metallization, transfer vacuum metallization, metal foil transfer, coating of metal powder-containing coating solution, coating of pearl pigment-containing coating solution and a method involving exposure of a photosensitive resin to an interference band for development. The gloss layer also preferably has a diffuse reflectance of from 0 to 70% and a thickness of from 0.02 to 100 $\mu$m.

It is still further preferred that at least one of character, image and pattern be formed on the gloss layer (C) directly or with at least one of an easily adhesive layer and a worked layer interposed therebetween by one or more of handwriting, printing, computer printing, engraving, laser working, embossing and hologram processing methods.

It is still further preferred that an adhesive layer (D) is provided on the side opposite the gloss layer (C), a release paper (E) is laminated on the adhesive layer (D) and the peel starting stress of the adhesive layer (D) is 500 g/cm width or less.

<Best Mode for Carrying Out the Invention>

The glossy film of the present invention will be further described hereinafter.

As mentioned above, the laminated film of the present invention comprises a base layer (A) and a gloss layer (C) or a film (I) having a laminate of a base layer (A') and an easily peelable layer (B) and a gloss layer (C) which may further comprise a adhesive layer (D), a release paper (E) or other laminated films as necessary.

In the case where the glossy film of the present invention comprises a base layer (A) and a gloss layer (C), when the film which has been processed for adhesion and bonded to an adherend is peeled off the adherend, peeling proceeds in the form of cohesive failure of the adhesive layer (D) and/or interfacial exfoliation of the adhesive layer (D). In this case, since the irreversible compressive deformation of the base layer (A) is accompanied by the occurrence of wrinkle or deformation of the gloss layer (C), it can be visually confirmed from the change of external appearance whether or not re-covering has been conducted.

The glossy film comprising a base layer (A) and a gloss layer (C) can be visually confirmed to see whether or not re-covering has been conducted but is also particularly useful for the case wherein it is subsequently desired to re-stick the film (as sealing label for food, etc.).

[Base layer (A)]

The base layer (A) has a thickness of 12 $\mu$m or more, preferably 15 $\mu$m or more when compressed at a load of 32 kgf/cm$^2$ in the thickness direction (compressed thickness). When the compressed thickness falls below this range, no wrinkle or deformation occurs when the film of the present invention which has been processed for adhesion and bonded to an adherend is peeled off the adherend, making it possible to re-stick, and this is undesirable.

For the measurement of compressed thickness, the pressure unit was attached to a Type Autograph AGS-5kND tensile tester (produced by Shimadzu Corporation). The thickness dislocation at a load of 32 kgf/cm$^2$ was then measured by a Type LK3100 CCD laser displacement (produced by KEYENCE CORPORATION).

The porosity of the base layer (A) of the present invention is from 10 to 60%, preferably from 20 to 50%. When the porosity falls below 10%, no wrinkle or deformation occurs when the film of the present invention which has been processed for adhesion and bonded to an adherend is peeled off the adherend. This makes it possible to re-stick the film, and this is undesirable. When the porosity exceeds 60%, wrinkle or deformation can easily occur during normal use or processing of the present glossy film, making the film difficult to handle, and this is undesirable.

The porosity is determined by the following equation.

$$\text{Porosity (\%)} = (\rho o - \rho)/\rho o \times 100$$

(where $\rho o$ is true density, and $\rho$ is density)

The density and true density were measured according to JIS-P8118. The true density is almost equal to density before stretching so far as the unstretched material doesn't contain a large amount of air.

Theopacityof the present invention conforms to JIS-P8138 and is represented by the percentage of ratio of light reflectance (black plate/white plate) measured with a black reference plate and a white reference plate put in contact with the back surface of the sample to be measured. The opacity of the base layer (A) is from 60 to 100%, preferably from 80 to 100%. When the opacity falls below 60%, the opacifying properties of the present glossy film are undesirably deteriorated.

Thethicknessofthebaselayer (A) of the present invention is from 20 to 500 μm, preferably from 20 to 400 μm. When the thickness falls below this range, the present glossy film undesirably lacks strength. When the thickness exceeds this range, the strength of the present glossy film is too high, preventing occurrence of wrinkle or deformation when the present glossy film which has been processed for adhesion and bonded to an adherend is peeled off the adherend. This makes it possible to re-stick the film to the adherend, and this is undesirable.

The base layer (A) of the present invention comprises a thermoplastic resin composition.

In the case where the glossy film of the present invention comprises a base layer (A) and a gloss layer (C) but has no easilypeelable layer (B) laminated thereon, the aforementioned thermoplastic resin composition comprises at least one of thermoplastic resin, finely divided inorganic powder and organic filler.

Examples of the thermoplastic resin constituting the base layer (A) include ethylene-based resins or propylene-based resins such as high density polyethylene, middle density polyethylene and low density polyethylene, polyolefin-based resins such as polymethyl-1-pentene and ethylene-cyclic olefin copolymer, functional group- containing polyolefin-based resins such as ethylene- vinyl acetate copolymer, ethylene-acrylic acid copolymer, maleic acid-modified polyethylene and maleic acid-modified polypropylene, polyamide-based resins such as nylon-6, nylon-6, 6, nylon-6, 10 and nylon-6,12, thermoplastic polyester-based resins such as polyethylene terephthalate, copolymer thereof, polyethylene naphthalate and aliphatic polyester, and thermoplastic resins such as polycarbonate, atactic polystyrene, syndiotactic polystyrene and polyphenylene sulfide. These thermoplastic resins may be used in admixture of two or more thereof. The layer (A) comprises one or more thermoplastic resins of polyelefin-based resins and polyester-based resins among these thermoplastic resins.

Among these thermoplastic resins, polyolefin- based resins, which are excellent in processability, are preferably used, and preferred among these polyolefin- based resins are propylene-based resins and ethylene- based resins from the standpoint of cost, water resistance and chemical resistance.

As a propylene-based resin, a copolymer of a propylene homopolymer which is a polypropylene or propylene having isotacticity, syndiotacticity or some steric regularity as a main component and an α-olefin such as ethylene, buten-1, hexene-1 and heptene-1,4-methylpentene-1 can be used. This copolymer may be a binary, tertiary or quaternary polymer or may be a random copolymer or block copolymer.

As the finely divided inorganic powder, a powder having a particle diameter of normally from 0.01 to 15 μm, preferably from 0.01 to 8 μm, more preferably from 0.03 to 4 μm can be used. Inparticular, calciumcarbonate, calcinedclay, silica, diatomaceous earth, talc, titanium oxide, barium sulfate, alumina, etc. may be used.

As the organic filler, a resin of the kind different from that of the thermoplastic resin which is a main component is preferably selected. For example, in the case where the thermoplastic resin film is a polyolefin-based resin film, the organic filler may be a polyethylene terephthalate, polybutylene terephthalate, polycarbonate, nylon-6, nylon-6,6, cyclic olefin homopolymer or copolymer of cyclic olefin with ethylene having a melting point of from 120°C to 300°C or a glass transition temperature of from 120°C to 280°C.

The aforementioned thermoplastic resin composition may further comprise a stabilizer, alight-stabilizer, a dispersant, a lubricant, etc. incorporated therein as necessary. As the stabilizers, a sterically hindered phenol-based, phosphorus-based and amine-based stabilizers in an amount of from 0.001 to 1% by weight may be incorporated in the thermoplastic resin composition. As the light-stabilizer, sterically hindered amine-based, benzotriazole-based and benzophenone- based stabilizers in an amount of from 0.001 to 1% by weight may be incorporated. As the dispersant for finely divided inorganic powder, a silane coupling agent, a higher aliphatic acid such as oleic acid and stearic acid, metal soap, polyacrylic acid, polymethacrylic acid, salt thereof or the like in an amount of from 0.01 to 4% by weight may be incorporated.

The thermoplastic resin film constituting the base layer (A) of the present invention may have a single-layer structure or multi-layer structure. The multi-layer structure, if used, may be a two-layer structure or a structure consisting of three or more layers. In the case of a single-layer structure, the film may be unstretched, monoaxially-stretched or biaxially-stretched. In the case of a two-layer structure, the film may be any of combination of unstretched layer/monoaxially-stretched layer, combination of unstretched layer/biaxially-stretched layer, combination of monoaxially-stretched layer/monoaxially-stretched layer, combination of monoaxially-stretched layer/biaxially-stretched layer and combination of biaxially-stretched layer/biaxially-stretched layer. In the case of a three-layer structure, the film may be any combination of the aforementioned single-layer structure and the two-layer structure. The lamination can be accomplished by any known method such as co-extrusion and lamination.

The base layer (A) of the present invention preferably has a multi-layer structure and comprises a layer which is stretched in at least one axial direction.

In the case where the base layer (A) is a single-layer polyolefin-based resin film comprising at least one of a finely divided inorganic powder and an organic filler incorporated therein, it normally comprises a polyolefin-based resin and at least one of a finely divided inorganic powder and an organic filler in an amount of from 40 to 99.5% by weight and from 0.5 to 60% by weight, preferably from 50 to 97% by weight and from 3 to 50% by weight, respectively.

In the case where the base layer (A) has a multi-layer structure, a substrate layer and a surface layer constitutes the base layer (A) and comprise at least one of a finely divided inorganic powder and an organic filler incorporated therein. The substrate layer normally comprises a polyolefin-based resin and at least one of a finely divided inorganic powder and an organic filler in an amount of from 40 to 99.5% by weight and from 0.5 to 60% by weight, preferably from 50 to 97% by weight and from 3 to 50% by weight, respectively. The surface layer normally comprises a polyolefin-based resin and at least one of a finely divided inorganic powder and an organic filler in an amount of from 25 to 100% by weight and from 0 to 75% by weight, preferably from 30 to 97% by weight and from 3 to 70% by weight, respectively.

The glossy film of the present invention also comprises a film (I) having a laminate of a base layer (A') and an easily peelable layer (B), a gloss layer (C) and optionally an adhesive layer, a release paper and other laminated films.

In the case where the easily peelable layer (B) is laminated on the glossy film of the present invention, the peeling of the present film which has been processed for adhesion and bonded to an adherend proceeds in the form of cohesive failure of the easily peelable layer (B). During this procedure, since the irreversible compressive deformation of the base layer (A') is accompanied by the occurrence of wrinkle or deformation of the gloss layer (C), it can be visually confirmed from the change of external appearance whether or not re-covering has been conducted and restoration to the original state is made impossible, making it possible to prevent re-covering.

[Film (I)]

The film (I) constituting the glossy film of the present invention is formed by laminating a base layer (A') made of a thermoplastic resin and an easily peelable layer (B) having a peel strength of from 5 to 150 g/cm width on each other.

The opacity of the film (I) is from 60 to 100%, preferably from 80 to 100%. When the opacity falls below 60%, the opacifying properties of the present glossy film are undesirably deteriorated.

[Base layer (A') constituting film (I)]

The base layer (A') constituting the film (I) itself has a greater strength than that of the easily peelable layer (B) described later. Thus, the base layer (A') itself is not peeled in the interior thereof when peeled by pulling the base layer (A').

The base layer (A') is made of a thermoplastic resin composition. Such a thermoplastic resin composition may be a single thermoplastic resin or a combination of two or more thermoplastic resins or may comprise at least one of a finely divided inorganic powder and an organic filler incorporated therein.

In a preferred embodiment of the thermoplastic resin composition to be used in the base layer (A'), the thermoplastic resin composition comprises a thermoplastic resin and at least one of a finely divided inorganic powder and an organic filler in an amount of from 40 to 98% by weight, preferably from 50 to 97% by weight, and from 2 to 60% by weight, preferably from 3 to 50% by weight, respectively. When the content of at least one of the finely divided inorganic powder and the organic filler in the thermoplastic resin composition to be used in the base layer (A') falls below 2% by weight, sufficient voids cannot be formed in the base layer (A'), resulting in the formation of a film having a low opacity and hence an insufficient data security. On the contrary, when the content of at least one of the finely divided inorganic powder and the organic filler in the thermoplastic resin composition to be used in the base layer (A') exceeds 60% by weight, difficulty in stretching can be encountered.

The thermoplastic resin composition constituting the base layer (A') that constitutes the film (I) may comprise the same thermoplastic resin and at least one of a finely divided inorganic powder and an organic filler as used in the base layer (A) free of the easily peelable layer (B).

The base layer (A') constituting the film (I) itself has a strength which is greater than that of the easily peelable layer (B) described later but is preferably low so that it exhibits a thickness of 12 µm or more when compressed at a load of 32 kgf/cm$^2$ in the thickness direction and a porosity of from 10 to 60% as in the base layer (A). Thus, the base layer (A') undergoes irreversible compressive deformation to cause the occurrence of wrinkle or deformation in the gloss layer (C) when peeled.

The base layer (A') may be monoaxially or biaxially stretched. The thickness of the base layer (A') is from 20 to 500 µm, preferably from 20 to 300 µm. When the thickness falls below 20 µm, the base layer (A') has a low breaking strength and, when pulled and peeled off the easily peelable layer (B), undergoes breakage in the course of peeling, making it impossible to attain the desired properties of the present invention. On the contrary, when the thickness exceeds 500 µm, the film (I) becomes more sensitive and hence a deteriorated adaptability to processing and printing in the case where it is used for secret seal, re-covering preventive label, etc.

The base layer (A') constituting the film (I) may have a single-layer structure, as in the case of base layer (A) free of easily peelable layer (B), or preferably a multi-layer structure from the standpoint of the capability of providing various properties. In the case of a multi-layer structure, as the number of stretching axes of the various layers, any of combinations explained above with reference to base layer (A) may be used.

It is preferred that the base layer (A') has a multi-layer structure comprising a layer (A'b) in contact with the easily peelable layer (B) and a layer (A'o) provided on the opposite side of the easily peelable layer (B). The content of at least one of the finely divided inorganic powder and organic filler in the layer (A'b) may be 8% by weight or more, more preferably 10% or more lower than that of the easily peelable layer (B). when the difference in the content of at least one of the finely divided inorganic powder and organic filler between the layer (A'b) and the layer (B) is less than 8% by weight or the content of at least one of the finely divided inorganic powder and organic filler in the layer (A'b) is higher than that of the layer (B), the strength of the layer (A'b) is too low to attain the desired capability of peeling at the layer (B). It is particularly preferred that the content of the at least one of the finely divided inorganic powder and the organic filler and the organic filler in the layer (A'b) be from 2 to 60% by weight and from 40 to 98% by weight, respectively.

Further, when the base layer (A') has a multi-layer structure, various functions such as writing properties, printing properties, adaptability to heat transfer, scratch resistance and adaptability to second processing can be added. It is particularly preferred that the content of at least one of the finely divided inorganic powder and organic filler in the layer and the organic filler in the layer (A'o) provided on the side of the base layer (A') opposite the easily peelable layer (B) be from 0 to 80% by weight and from 20 to 100% by weight, respectively.

[Easily peelable layer (B)]

The easily peelable layer (B) of the present invention is a layer which exhibits a lower strength than that of other layers and thus can easily undergo cohesive failure itself. The peel strength of the easily peelable layer (B) is from 5 to 150 g/cm width.

The easily peelable layer (B) is preferably made of a thermoplastic resin composition, and such a thermoplastic resin composition maybe a single thermoplastic resin or a combination of two or more thermoplastic resins and may contain at least one of a finely divided inorganic powder and an organic filler.

By incorporating at least one of the finely divided inorganic powder and the organic fillers in the easily peelable layer (B), a more stable peelability can be obtained. The content of at least one of the finely divided inorganic powder and the organic fillers in the easily peelable layer (B) is from 10 to 80% by weight, preferably from 15 to 75% by weight, and the content of thermoplastic resin in the easily peelable layer (B) is from 20 to 90% by weight, preferably from 25 to 85% by weight.

When the content of the at least one of the finely divided inorganic powder and the organic fillers in the easily peelable layer (B) falls below 10% by weight, a sufficient peelability cannot be obtained. When the content of the at least one of the finely divided inorganic powder and the organic fillers in the easily peelable layer (B) exceeds 80% by weight, molding stability is impaired. Further, the easily peelable layer (B) is preferably a stretched resin film layer, and stretching makes it possible to obtain an easily peelable layer (B) having an excellent uniformity in thickness. To this end, the thermoplastic resin constituting the easily peelable layer (B) is preferably one which can be easily stretched.

As the thermoplastic resin, the same resin as used in the formation of the base layer (A') may be used.

As the at least one of a finely divided inorganic powder and an organic filler to be incorporated in the easily peelable layer (B), the same material as used in the base layer (A') may also be used.

The thickness of the easily peelable layer (B) is from 0.1 to 100 μm, preferably from 0.2 to 80 μm, more preferably from 0.3 to 60 μm. When the thickness falls below 0.1 μm, a sufficient peelability cannot be obtained, and when the thickness exceeds 100 μm, the problem of peel strength no longer exists, but the transparency of the easily peelable layer (B) is reduced, causing the deterioration of data recognizability (e.g., whether or not data printed under the easily peelable layer (B) can be recognized) after peeling of the base layer (A'). Furthermore, the surface left unpeeled is not uniform but uneven, making it difficult to read the base layer (A') by a bar code reader if the base layer (A') has a bar code or the like printed thereon so that it is used as control tag or the like.

[Formation of base layer (A), base layer (A') and easilypeelable layer (B)]

The method of forming the base layer (A), base layer (A') and easily peelable layer (B) of the present invention is not specifically limited and various known methods may be used. Specific examples of these methods include casting method which comprises extruding a molten resin into a sheet through a single-layer or multi-layer T-die or I-die connected to a screw extruder, inflation molding method which comprises extruding a molten resin through a circular die into a tube which is then inflated by internal air pressure, calender molding method which comprises rolling a kneaded material over a plurality of hot rollers into a sheet, rolling method, and any other known methods.

[Lamination]

The base layer (A) or base layer (A') constituting the glossy film of the present invention may be a laminate of a number of layers, and in the present invention, the easily peelable layer (B) can be laminated on the base layer (A') to form a film (I). As a method of laminating these layers, any of the various known methods may also be used. Specific examples of these methods include multi-layer die method which comprises lamination in a die using a feed block or multi-manifold, extrusion lamination method involving the use of a plurality of dices, as well as other known methods. Furthermore, the multi-layer die and the extrusion lamination may be used in combination.

In the case where the glossy film of the present invention comprises a film (I) having an easily peelable layer (B) laminated thereon, the base layer (A') and the easily peelable layer (B) are preferably stretched in at least one axial direction after lamination. Since the easily peelable layer (B) of the present invention has a low strength and a small thickness, it is extremely difficult for the easily peelable layer (B) to stretch alone. By stretching the base layer (A') and the easily peelable layer (B) after lamination, the easily peelable layer (B) can be stretched.

[Stretching]

Stretching can be accomplished by any of commonly used various methods. Stretching can be conducted at a known temperature range suitable for thermoplastic resin which may be above the glass transition temperature and lower than the melting point of the crystalline portion. In particular, in the case where the thermoplastic resin is a propylene homopolymer (melting point: 155 to 167°C), the stretching temperature is from 100 to 164°C, and in the case where the thermoplastic resin is a high density polyethylene (melting point: 121 to 134°C), the stretching temperature is from 70 to 133°C, which is 1 to 70°C lower than the melting point. Furthermore, in the case of polyethylene terephthalate (melting point: 246 to 252°C), the temperature at which crystallization does not proceed rapidly is selected. The stretching rate is preferably from 20 to 350 m/min.

As the stretching method, a longitudinal stretching method utilizing the difference in circumferential speed between rolls, crosswise stretching method using a tenter oven, rolling method, simultaneous biaxial stretching method using a tenter oven and a linear motor in combination or the like if a casting film is stretched may be used. Furthermore, as the method of stretching an inflation film, a simultaneous biaxial stretching method involving tubular method may be used. The stretching factor is not specifically limited and is properly determined taking into account the characteristics of the thermoplastic resin used. For example, in the case where a propylene homopolymer or copolymer thereof is used as the thermoplastic resin, the stretching factor is from about 1.2 to 12, preferably from about 2 to 10 if stretched in one direction or from 1.5 to 60, preferably from 4 to 50 as calculated in terms of area if stretched biaxially. In the case where other thermoplastic resins are used, the stretching factor is from about 1.2 to 10, preferably from about 2 to 5 if stretched in one direction or from 1.5 to 20, preferably from 4 to 12 as calculated in terms of area if stretched biaxially.

The porosity of the base layer (A) thus obtained is as previously mentioned, and the film (I) obtained by laminating an easily peelable layer (B) on a base layer (A') has a large number of fine pores provided therein at a porosity of from 10 to 60%, preferably from 20 to 45%. The presence of pores makes the film more flexible than multilayer stretched film free of pores. Furthermore, as described later, there is a close relationship between the porosity and the peel strength, and by raising the porosity of the easily peelable layer (B), the peel strength of the easilypeelable layer (B) can be lowered.

The opacity of the film (I) obtained by laminating an easily peelable layer (B) on a base layer (A') is from 60 to 100%, preferably from 70 to 100%, more preferably from 80 to 100%. When the opacity falls below 60%, the opacifying properties of the glossy film are undesirably deteriorated.

[Easily peelable layer (B) provided by coating method]

The easily peelable layer (B) of the present invention may also be provided on the base layer (A') by a coating method.

There are various methods of forming the easily peelable layer (B) by a coating method, but the incorporation of a particulate pigment (b) in a binder (a) makes it possible to obtain a more stable peelability. The content of the particulate pigment (b) in the easily peelable layer (B) is from 5 to 95% by weight, preferably from 15 to 95% by weight, more preferably from 25 to 95% by weight. When the content of the particulate pigment (b) in the easily peelable layer (B) falls below 5% by weight, a sufficient peelability cannot be obtained, and when the content of the particulate pigment (b) in the easily peelable layer (B) exceeds 95% by weight, the strength of the easily peelable layer (B) is too great, impairing the forming stability and secondary processing stability of the easily peelable layer (B).

[Binder (a)]

The binder (a) to be used in the easily peelable layer (B) of the present invention may be a water-soluble resin or a water-insoluble resin. The water-soluble resin may be applied to the easily peelable layer (B) of the present invention in the form of an aqueous solution and the water-insoluble resin may be applied to the easily peelable layer (B) of the present invention in the form of a solvent solution, an emulsion or a latex.

As the water-soluble, oxidized starch, etherified starch, methoxy cellulose, carboxymethyl cellulose, hydroxyethyl cellulose, casein, gelatin, soybean protein, polyvinylhydrin, polyacrylamide, vinyl alcohol, polyacrylic acid or the like may be used. Alternatively, as the water-insoluble resin, urethane resin, terpentine resin, petroleum resin, ethylene-vinyl acetate copolymer resin, vinyl chloride resin, vinyl chloride-vinyl acetate copolymer resin, vinylidene chloride resin, vinyl chloride- vinylidene copolymer resin, acrylic acid ester copolymer resin, methacrylic acid ester copolymer resin, butyral resin, silicon resin, polyester resin, nitrocellulose resin, styrene-acryl copolymer resin, styrene-butadiene copolymer resin or the like may be used.

These binders may be used singly or in admixture of two or more thereof. Among these resins, water- insoluble resins are preferably used as the strength of the water-insluble resins cannot easily be affected by humidity.

[Particulate pigment (b)]

The particulate pigment (b) to be used in the easily peelable layer (B) of the present invention may be an inorganic particulate pigment or an organic particulate pigment and may be any known material. Examples of the inorganic particulate pigment, if used, include calcium carbonate, calcined clay, silica, diatomaceous earth, talc, titanium oxide, barium sulfate, alumina, zeolite, mica, sericite, bentonite, sepiolite, vermiculite, dolomite, wollastonite, glass fiber, and other know inorganic particulates. The organic particulate pigment, if used, is preferably one which shows little change of strength or properties at a commonly used humidity. For example, an ethylene resin, propylene resin, styrene resin, acryl resin, epoxy resin, melamine resin, phenol resin, styrene-acryl copolymer, styrene-butadiene copolymer, starch, cellulose or the like may be used in the form of powder, bead, hollow particle or the like. The particle diameter of the particulate pigment to be used is from 0.01 to 50 μm, and preferably from 0.01 to 30 μm.

These particulate pigments may be used singly or in admixture of two or more thereof.

[Formation of easily peelable layer (B) by coating method]

The coating solution is prepared by dispersing the particulate pigment (b) using a Cowles dissolver, delitter, sandgrinder or the like, and then uniformly mixing the dispersed particulate pigment with a solution or emulsion of the binder (a). In this case, auxiliary chemicals such as anti-foaming agent, electrically- conducting agent, dispersant, thickening agent, lubricant and wetting agent may be added as necessary.

The formation of the easily peelable layer (B) on the base layer (A') by a coating method is accomplished by coating the coating solution by an ordinary coating method such as a mayor bar coating method, a gravure roll coating method, a reverse roll coating method, a blade coating method, a knife coating method, an air knife coating method, a slit die coating method and a gate roll coating method followed by a drying/solidification step.

The thickness of the easily peelable layer (B) provided by a coating method is preferably as defined previously.

[Peel strength]

In the case where the glossy film of the present invention comprises a film (I) having an easily peelable layer (B), the peel strength averaged over MD direction (Machine Direction) and TD direction (Traverse Direction) is preferably from 5 to 150 g/cm width, more preferably from 5 to 100 g/cm width, even more preferably from 5 to 75 g/cm width. When the peel strength falls below 5 g/cm width, there are problems of secondary processing properties such as printing, typing and slitting. When the peel strength exceeds 150 g/cm width, the base layer (A') cannot be peeled or requires a raised stress to peel, and this is not practical. Furthermore, material destruction occurs at sites other than the easily peelable layer (B), causing the generation of fluffing on the peeled surface.

For the measurement of peel strength, the film (I) is stored in a constant temperature chamber (temperature: 20°C; relative humidity: 65%) for 12 hours. An adhesive tape (trade name: Cellotape, produced by NICHIBAN CO., LTD. was stuck to the surface of the easily peelable layer (B). The laminate was then slit into a size of 10 mm width and 100 mm length. Using a tensile tester (trade name: AUTOGRAPH, produced by Shimadzu Corporation), the base layer (A) was then peeled at an angle of 180°. The stress at which peeling is stably conducted was measured by a load cell.

[Gloss layer (C)]

The gloss layer (C) of the present invention is preferably formed by any methods such as direct vacuum metallization, transfer vacuum metallization, metal foil transfer, coating of metal powder-containing coating solution, coating of pearl pigment-containing coating solution and exposing a photosensitive resin to an interference band for subsequent development.

For the formation of the gloss layer (C) by direct vacuum metallization, an anchor coating agent is coated over at least one surface of the base layer (A) or base layer (A'). Aluminum or silver is then directly vacuum-deposited on the anchor coated surface to provide a gloss layer (C) on the base layer (A) or base layer (A'). When the surface of the base layer (A) or base layer (A') to be vacuum-metallized is rough, the diffuse reflectance of the gloss layer (C) can increase to impair glossiness.

For the formation of the gloss layer (C) by transfer vacuum metallization, a thermoplastic resin film is used as a release film. A release agent is then coated over the release film to form a release layer. A vacuum-deposited metal layer is then provided on the surface of the release layer. The release film is then dry-laminated on the entire surface of the base layer (A) or base layer (A') having an adhesive layer provided on the surface thereof. The release film is then peeled to provide a gloss layer (C) on the base layer (A) or base layer (A'). When the surface of the release film to be vacuum-metallized is rough, the diffuse reflectance of the gloss layer (C) can increase to impair glossiness.

For the formation of the gloss layer (C) by metal foil transfer, a so-called hot stamping is used. A release film having a vacuum-deposited metal layer provided thereon as in transfer vacuum metallization is transferred as a transfer foil to a part or whole of at least one surface of the base layer (A) or base layer (A') by heat under pressure to provide a gloss layer (C).

The thickness of the gloss layer (C) formed by direct vacuum metallization, transfer vacuum metallization or metal foil transfer is from 0.02 to 100 $\mu$m to give a metallic luster.

For the formation of the gloss layer (C) by coating of metal powder-containing coating solution or coating of pearl pigment-containing coating solution, a metal powder and/or a pearl pigment, a resin acitng as a binder, and at least one of an ordinary finely divided inorganic powder and an organic filler may be mixed and diluted with a solvent.

As the metal powder, aluminum flake, aluminum paste or other metal powder may be used.

As the pearl pigment, thin tabular particulate mica coated with metal oxide such as titanium dioxide, zirconium oxide and iron oxide may be used, and the average particle diameter of the pearl pigment is from 1 to 150 $\mu$m.

As the resin which acts as a binder, a styrene-maleic anhydride copolymer, styrene-acrylicacidalkylester copolymer, polyvinyl alcohol, ethylene-vinyl alcohol copolymer containing silanol group, polyvinyl pyrrolidone, ethylene-vinyl acetate copolymer, methyl ethyl cellulose, sodapolyacrylate, casein, starch, polyethylene polyamine, polyester, polyacrylamide, vinylpyrrolidone-vinyl acetate copolymer, cationically-modified polyurethane resin or the like in the form of solution resin or emulsion may be used.

As the at least one of an ordinary finely divided inorganic powder and an organic filler, the following compounds may be used.

As the finely divided inorganic powder, powders having a primary or secondary particle diameter of normally from 0.01 to 15 $\mu$m may be used. For example, calcium carbonate, calcined clay, silica, diatomaceous earth, talc, titanium oxide, barium sulfate, alumina, zeolite or the like may be used.

As the organic filler, polyethylene terephthalate, polybutylene terephthalate, polycarbonate, nylon-6, nylon-6, 6, polystyrene, acrylicresin, various hollow fillers made of these resins or the like may be used.

In order to prepare the coating solution, the aforementioned metal powder and/or pearl pigment, the resin which acts as a binder, and at least one of the ordinary finely divided inorganic powder and the organic filler may be used singly and/or in combination.

Besides the aforementioned materials, an ultraviolet absorber, surface active agent, etc. may be used as necessary.

The mixing proportion of metal power and/or pearl pigment to binder resin is preferably from 10/100 to 80/100 as calculated in terms of solid content by weight.

The coating of the gloss layer coating solution over the base layer (A) or base layer (A') is accomplished by means of a roll coater, blade coater, bar coater, air knife coater, size press coater, gravure coater, reverse coater, die coater, lip coater, spray coater or the like. Smoothing is effected as necessary. A drying step is then conducted to remove extra solvent.

The coating amount is from 0.1 to 50 g/m$^2$, preferably from 1 to 30 g/m$^2$ as calculated in terms of solid content after drying.

For the formation of the gloss layer (C) by the method involving exposure of photosensitive resin to an interference band for subsequent development, an ordinary hologram processing method may be used. As the method of forming a hologram layer on the base layer (A) or base layer (A') as a gloss layer (C) there maybe used a method which comprises coating a photosensitive resin layer directly on the base layer (A) or base layer (A'), exposing the photosensitive resin layer to an interference band, and then developing the photosensitive resin layer or a method which comprises exposing a photo sensitive resin layer provided on a release layer as in transfer vacuum metallization or metal foil transfer to an interference band, developing the photosensitive resin layer, and then transferring the hologram layer thus formed onto the base layer (A) or base layer (A'). The release film is preferably transparent from the standpoint of formation of interference band described later.

The transfer method can be easily used because of the processability of hologram itself and the capability of forming a partial gloss layer (C) on the base layer (A) or base layer (A').

As the hologram-forming material, a known material such as silver salt material, bichromatic acid gelatin emulsion, photopolymerizable resin and photolinkable resin is used. In general, a binder resin, a photopolymerizable compound, a photopolymerization initiator, a sensitizer and a solvent may be combined to prepare a coating solution having a solid content of from about 15 to 25% by weight.

The aforementioned coating solution is coated over the base layer (A) or base layer (A') directly or via a transparent release film, and then dried and solidified to a thickness of from 0.1 to 50 μm. In the case where the coating solution is coated directly over the base layer (A) or base layer (A'), a transparent protective film may be stuck to the coat layer.

For the exposure of the aforesaid coat layer to an interferenceband, the coat layer may be irradiated with two-flux laser beam on the transparent protective film or transparent release film side thereof to perform the recording. Alternatively, light beam of interference of object light with reference light may be recorded. Alternatively, the coat layer is irradiated with a laser beam on the transparent release film side thereof with a hologram precursor in close contact with the coat layer so that a band of interference of light reflected by the hologram precursor with incident light is recorded, making it possible to record the hologram data.

Thereafter, the photopolymerization initiator is decomposed by irradiation with ultraviolet ray, electron ray or the like. The photopolymerizable compound is then diffused and moved by heat, stabilizing the interference band.

The gloss layer (C) formed by the various aforementioned methods may be colored by incorporating a colored pigment therein or by providing a transparent layer containing a colored pigment on the gloss layer (C).

The gloss layer (C) of the present invention has a diffuse reflectance of from 0 to 70%, preferably from 0 to 50% as measured by the method described in JIS-Z8722. In the case where the diffuse reflectance exceeds 70%, the gloss layer (C) loses its gloss, making it undesirably difficult to definitely recognize visually wrinkle or deformation generated upon peeling of the present film which has been processed for adhesion and bonded to an adherend.

The gloss layer (C) of the present invention has a thickness of from 0.02 to 100 μm, preferably from 0.02 to 80 μm. When the thickness falls below 0.02 μm or exceeds 100 μm, the diffuse reflectance undesirably does not fall within the desired range and it may be difficult to form a wrinkle or deformation upon peeling of the present filmwhichhas been processed for adhesion and bonded to an adherend to disadvantage.

Any one of character, image and pattern can be formed directly on the gloss layer (C) or with an easily adhesive layer and/or worked layer interposed therebetween by one or more of handwriting, printing, computer printing, engraving, laser working, embossing and hologram processing. These recorded data can themselves be advantageously recognized visually for deformation as wrinkle or deformation occurs when the present film which has been processed for adhesion and bonded to an adherend is peeled.

[Adhesive layer (D)]

The glossy film of the present invention may have an adhesive layer (D) provided on the side thereof opposite the gloss layer (C) as necessary.

The adhesive strength (or cohesive force) required to peel the adhesive layer (D) off an adherend to which a label having the adhesive layer (D) provided thereon has been bonded is preferably predetermined high enough to cause irreversible compressive deformation of the base layer (A) or base layer (A') but lower than the strength of the substrate (or cohesive force) to prevent destruction of the base layer (A) or base layer (A'). In the case where the adhesive layer (D) is provided on the film (I) having an easily peelable layer (B), the adhesive strength is preferably predetermined to be high enough to cause peeling on the easily peelable layer (B) but so that it higher than the peel strength (or cohesive force) of the easily peelable layer (B).

Typical examples of such an adhesive agent include rubber-based adhesive agents, acryl-based adhesive agents, and silicone-based adhesive agents. Specific examples of the rubber-based adhesive agents include polyisobutylene rubber, butyl rubber, mixture thereof, and compounds obtained by incorporating a tackifier such as abietic acid rosin ester, terpene phenol copolymer and terpene indene copolymer in these rubber-based adhesive agents. Specific examples of the acryl-based adhesive agents include those having a glass transition point of - 20°C or less such as 2-ethylhexyl acrylate-acrylic acid n-butyl copolymer and 2-ethylhexyl acrylate-acrylic acid ethyl-methacrylic acid methyl copolymer.

These adhesive agents are normally used in solvent form, emulsion form, hot-melt form or the like, and a solvent type adhesive agent or emulsion type adhesive agent is normally coated to make a laminate. The coating may be accomplished by means of a roll coater, blade coater, bar coater, air knife coater, gravure coater, reverse coater, die coater, lip coater, spray coater, comma coater or the like. Smoothing is effected as necessary. A drying step is then conducted to form the adhesive layer (D).

The formation of the adhesive layer (D) is normally accomplished by a process which comprises coating an adhesive agentonthereleasepaper (E) describedlater, optional lydrying the coat layer, and then laminating a glossy film on the adhesive layer thus formed. However, the formation of the adhesive layer (D) may be optionally accomplished by coating an adhesive agent directly over the glossy film. The coating of the adhesive agent is not specifically limited, but is normally from 3 to 60 g/m$^2$, preferably from 10 to 40 g/m$^2$ as calculated in terms of solid content.

In the case where the adhesive strength between the glossy film and the adhesive agent is small, it is preferred that an anchor coating agent be coated over the surface of the glossy film in contact with the adhesive agent before the lamination or coating of the adhesive agent thereon. As the anchor coating agent, a polyurethane, polyisocyanate-polyether polyol, polyisocyanate- polyester polyol-polyethyleneimine, alkyl titanate or the like may be used, and these anchor coating agents are normally used in the form of solution in an organic solvent such as methanol, ethyl acetate, toluene and hexane or water. The coating of the anchor coating agent is from 0.01 to 5 g/m$^2$, preferably from 0.02 to 2 g/m$^2$ as calculated in terms of solid content after coating and drying.

[Release paper (E)]

Furthermore, a release paper (E) may be provided on the adhesive layer (D) as necessary. The release paper (E) to be provided on the glossy film with the adhesive layer (D) interposed therebetween is normally subjected to a silicone treatment on the surface thereof in contact with the adhesive layer (D) to improve the peelability from the adhesive layer (D). As the release paper (E) there may be normally used an ordinary paper. A high quality paper may be used as it is or after calendered, coated with a resin or laminated with a film. Glassine paper, coated paper, plastic film or the like may be used after being silicone-treated.

Any one of character, image and pattern can be formed on the gloss layer (C) on the glossy film of the present invention on the side thereof opposite the gloss layer (C) and/or on the surface of the adhesive layer (D) by one or more of handwriting, printing, computer printing, engraving, laser working, embossing and hologram processing as necessary. When the present film which has been processed for adhesion and bonded to an adherend is peeled, these recorded data are left behind on the adherend so that peeling can advantageously be made more definitely obvious. The formation of data may be conducted while the glossy film is in a simple body or after the formation of a pressure-sensitive adhesive label by bonding of the release paper to the glossy film.

[Peeling starting stress]

The glossy film having an adhesive layer (D) provided thereon is cut into a specimen having a width of 10 mm and a length of 100 mm. A high quality paper having a thickness of 100 μm is then stuck to the specimen on the adhesive agent over an area of length of 30 mm from the end of the specimen to the total width of the specimen to prepare a margin for gripping. The specimen is then stuck to an aluminum sheet having a width of 20 mm, a length of 110 mm and a thickness of 1 mm in such an arrangement that it does not extend beyond the edge of the aluminum sheet. The laminate is then stored in a constant temperature chamber (temperature: 20°C; relative humidity: 65%) for 12 hours. Using a tensile tester (AUTOGRAPH) produced by Shimadzu Corporation, the specimen and the aluminum sheet are then peeled off each other at a pulling rate of 300 mm/min and at an angle of 180°. The stress is measured by means of a load cell. The maximum stress is defined to be the peeling starting stress. The peeling starting stress of the present invention is 500 g/cm width, preferably 400 g/cm width. When the peeling starting stress is higher than 500 g/cm, the object to which the glossy film having an adhesive layer provided thereon has been bonded undergoes surface destruction in an attempt to peel the glossy film, making it impossible to propagate peeling to the easily peelable layer (B) or causing only the deformation of the glossy film. This is not practical.

<Example>

The present invention will be further described in the following examples, comparative examples and testing examples. The following materials, amount, proportion, procedure, etc. may be properly changed in so far as they do not depart from the spirit of the present invention. Accordingly, the scope of the present invention is not limited to the following specific examples. The term "%" as used hereinafter is % by weight unless otherwise specified.

The thermoplastic resins and fillers used in the production examples of the present invention are described in Table 1.

The thermoplastic resin compositions used in the examples of the present invention and comparative examples are described in Table 2.

Table 1

| Kind | Contents |
|---|---|
| PP1 | Propylene homopolymer [Novatec PP:EA8, produced by Japan Polychem Corporation] (MFR (230°C, 2.16 kg load) = 0.8 g/10 min |
| PP2 | Propylene homopolymer [Novatec PP:MA4, produced by Japan Polychem Corporation] (MFR (230°C, 2.16 kg load) = 5 g/10 min |
| PP3 | Propylene homopolymer [Novatec PP:FY4, produced by Japan Polychem Corporation] (MFR (230°C, 2.16 kg load) = 5 g/10 min |
| PP4 | Propylene homopolymer [Novatec PP:MA3, produced by Japan Polychem Corporation] (MFR (230°C, 2.16 kg load) = 11 g/10 min |
| HDPE | High density polyethylene [Novatec HD:HJ360, produced by Japan Polychem Corporation] (MFR (190°C, 2.16 kg load) = 5.5 g/10 min |
| Calcium carbonate | Heavy calcium carbonate [Softon 1800, produced by BIHOKU FUNKA KOGYO CO., LTD.] (average particle diameter: 1.2 μm) |
| Titanium dioxide | Rutile titanium oxide [Tipaque CR-60, produced by ISHIHARA SANGYO KAISHA, LTD.] (average particle diameter: 0.2 μm) |

Table 2

| Name of material | Contents |
|---|---|
| Thermoplastic resin composition a | Resin composition obtained by kneading a mixture of 65 wt-% of PP1, 10 wt-% of HDPE and 25 wt-% of calcium carbonate using an extruder the temperature of which has been set at 250°C |
| Thermoplastic resin composition b | Resin composition obtained by kneading a mixture of 99 wt-% of PP2 and 1 wt-% of titanium dioxide using an extruder the temperature of which has been set at 250°C |
| Thermoplastic resin composition c | Resin composition obtained by kneading 100 wt-% of PP2 using an extruder the temperature of which has been set at 250°C |
| Thermoplastic resin composition d | Resin composition obtained by kneading a mixture of 81 wt-% of PP1, 3% by weight of HDPE and 16 wt-% of calcium carbonate using an extruder the temperature of which has been set at 270°C |
| Thermoplastic resin composition e | Resin composition obtained by kneading a mixture of 54 wt-% of PP2 and 46 wt-% of calcium carbonate using an extruder the temperature of which has been set at 210°C |
| Thermoplastic resin composition f | Resin composition obtained by kneading a mixture of 87 wt-% of PP1, 10% by weight of HDPE and 3 wt-% of calcium carbonate using an extruder the temperature of which has been set at 250°C |
| Thermoplastic resin composition g | Resin composition obtained by kneading a mixture of 45 wt-% of PP2, 15% by weight of HDPE and 40 wt-% of calcium carbonate using an extruder the temperature of which has been set at 250°C |
| Thermoplastic resin composition h | Resin composition obtained by kneading a mixture of 70 wt-% of PP3, 10% by weight of HDPE and 20 wt-% of calcium carbonate using an extruder the temperature of which has been set at 230°C |
| Thermoplastic resin composition i | Resin composition obtained by kneading a mixture of 60 wt-% of PP3, 10% by weight of HDPE and 30 wt-% of calcium carbonate using an extruder the temperature of which has been set at 230°C |
| Thermoplastic resin composition j | Resin composition obtained by kneading a mixture of 60 wt-% of PP4 and 40 wt-% of calcium carbonate using an extruder the temperature of which has been set at 230°C |
| Thermoplastic resin composition k | Resin composition obtained by kneading a mixture of 40 wt-% of PP4 and 60 wt-% of calcium carbonate using an extruder the temperature of which has been set at 230°C |

[Production of base layer (A)]

(Production Example 1)

The thermoplastic resin composition a, the thermoplastic resin composition b and the thermoplastic resin composition c described in Table 2 were melt-kneaded at 250°C in three separate extruders as composition (A1), composition (A2) and composition (A3), respectively.

Thereafter, these compositions were fed into a co-extrusion die where they were laminated (A2/A1/A3), and then extruded into a sheet which was then cooled to 60°C over a cooling roll to obtain a laminated film.

This film was reheated to 145°C, stretched longitudinally by a factor of 5 by making the use of the difference in circumferential speed between a number of rolls, reheated to 150°C, and then stretched crosswise by a factor of 8.5 by a tenter. Thereafter, the laminated film was annealed at 160°C, cooled to 60°C, and then slit at the edge thereof to obtain a three-layer (biaxially-stretched/biaxially-stretched/biaxially-stretched) laminated film having a thickness of 54 μm (A2/A1/A3 = 4 μm/46 μm/4 μm) as a base layer (A). The base layer (A) has a porosity of 40%, a compressed thickness of 22.4 μm at a load of 32 kgf/cm$^2$ in the thickness direction, an opacity of 90% and a density of 0.78 g/cm$^3$.

(Production Example 2)

The thermoplastic resin composition d as composition (A1) was kneaded in an extruded the temperature of which had been set at 270°C, extruded through a die into a sheet, and then cooled by a cooling device to obtain an unstretched film. This film was reheated to a temperature of 150°C, and then stretched longitudinally by a factor of 5 to obtain a five-fold longitudinally-stretched film.

The thermoplastic resin composition e described in Table 2 as composition (A2) was kneaded at 210°C in a separate extruder, and then extruded through a die into a sheet which was then laminated on the both surfaces of the five-fold longitudinally-stretched film obtained at the aforesaid step to obtain a three-layer laminated film.

Subsequently, this three-layer laminated film was cooled to a temperature of 60°C, reheated to a temperature of 155°C, stretched crosswise by a factor of 9 by a tenter, annealed at a temperature of 165°C, cooled to a temperature of 60°C, and then slit at the edge thereof to obtain three-layer (monoaxially-stretched/biaxially-stretched/monoaxially-stretched) laminated film having a thickness of 110 μm (A2/A1/A2 = 25 μm/60 μm/25 μm) as a base layer (A). The base layer (A) has a porosity of 32%, a compressed thickness of 24.3 μm at a load of 32 kgf/cm$^2$ in the thickness direction, an opacity of 94% and a density of 0.77 g/cm$^3$.

(Production Example 3)

The thermoplastic resin composition f as composition (A1) was kneaded in an extruded the temperature of which had been set at 270°C, extruded through a die into a sheet, and then cooled by a cooling device to obtain an unstretched film. This film was reheated to a temperature of 160°C, and then stretched longitudinally by a factor of 4 to obtain a four-fold longitudinally-stretched film.

The thermoplastic resin composition g described in Table 2 as composition (A2) was kneaded at 230°C in a separate extruder, and then extruded through a die into a sheet which was then laminated on the both surfaces of the four-fold longitudinally-stretched film obtained at the aforementioned step to obtain a three-layer laminated film.

Subsequently, this three-layer laminated filmwas cooled to a temperature of 60°C, reheated to a temperature of 170°C, stretched crosswise by a factor of 9 by a tenter, annealed at a temperature of 170°C, cooled to a temperature of 60°C, and then slit at the edge thereof to obtain three-layer (monoaxially-stretched/biaxially-stretched/monoaxially-stretched) laminated film having a thickness of 65 μm (A2/A1/A2 = 15 μm/35 μm/15 μm) as a base layer (A). The base layer (A) has a porosity of 5%, a compressed thickness of 9.6 μm at a load of 32 kgf/cm$^2$ in the thickness direction, an opacity of 30% and a density of 1.01 g/cm$^3$.

(Production Example 4)

A commercially available transparent PET film having a thickness of 50 μm (trade name: Diafoil T600E, produced by Mitsubishi Polyester Film Corp.) was prepared as a base layer (A). The PET film has a porosity of 0%, a compressed thickness of 2.3 μm at a load of 32 kgf/cm2 in the thickness direction, an opacity of 3.5% and a density of 1.4 g/cm$^3$.

The results of the production of base layer (A) are described in Table 3.

[Production of Film (I)]

(Production Example 5)

The thermoplastic resin composition j, the thermoplastic resin composition h and the thermoplastic resin composition i described in Table 2 as the composition for layer (B), the composition for layer (A'b), and the composition for layer (A'o), respectively, were kneaded in separate extruders, the temperature of which had been set at 230°C. They were then fed into a co-extrusion die, the temperature of which had been set at 250°C, where they were laminated (B/A'b/A'o) and then extruded into a sheet which was then cooled by a cooling device to obtain an unstretched three-layer film.
This film was reheated to 130°C, and then stretched longitudinally by a factor of 5. Subsequently, the film was cooled to a temperature of 60°C, reheated to 150°C, and then stretched crosswise by a factor of 8.0 by a tenter. The film was annealed at 162°C, cooled to 60°C, and then slit at the edge thereof to obtain a three-layer film (I) having a thickness of 60 μm (B/A'b/A'o = 1 μm/49 μm/10 μm), a peel strength of 25 g/cm and an opacity of 91%.

(Production Example 6)

The thermoplastic resin composition j and the thermoplastic resin composition i as the composition for layer (B) and the composition for layer (A'b), respectively, were kneaded in separate extruders, the temperature of which had been set at 230°C. They were then fed into a co-extrusion die, the temperature of which had been set at 250°C, where they were laminated (B/A'b) and then extruded into a sheet which was then cooled by a cooling device to obtain an unstretched two-layer film. This film was reheated to 130°C, and then stretched longitudinally by a factor of 4. The thermoplastic resin composition has composition for layer (A'o) was kneaded in an extruder, the temperature of which was set at 250C, and then extruded into a sheet which was then laminated on the four-fold longitudinally -stretched film obtained at the aforementioned step on the layer A' (b) side thereof to obtain a three-layer laminated film (B/A'b/A'o). Subsequently, this three- layer laminated film was cooled to a temperature of 60°C, reheated to 160°C, and then stretched crosswise by a factor of 7.5 by a tenter. The film was annealed at 165°C, cooled to 60°C, and then slit at the edge thereof to obtain a three-layer (biaxially-stretched/biaxially -stretched/monoaxially-stretched) film (I) having a thickness of 80 μm (B/A'b/A'o = 1 μm/49 μm/30 μm), a peel strength of 40 g/cm and an opacity of 88%.

(Production Example 7)

The thermoplastic resin composition k, the thermoplastic resin composition h and the thermoplastic resin composition i as the composition for layer (B), the composition for layer (A'b) and the composition for layer (A'o), respectively, were kneaded in separate extruders, the temperature of which had been set at 240°C. They were then fed into a co-extrusion die, the temperature of which had been set at 270°C, where they were laminated (B/A'b/A'o) and then extruded into a sheet which was then cooled by a cooling device to obtain an unstretched three-layer film.
This filmwas reheated to 120°C, stretched longitudinally by a factor of 5, annealed at 160°C, subjected to corona discharge treatment, and then slit at the edge thereof to obtain a three-layer (monoaxially-stretched/monoaxially-stretched/monoaxially-stretched) film (I) having a thickness of 60 μm (B/A'b/A'o = 4 μm/46 μm/10 μm), a peel strength of 90 g/cm and an opacity of 87%.

(Production Example 8)

The thermoplastic resin composition j, the thermoplastic resin composition h and the thermoplastic resin composition i as the composition for layer (B), the composition for layer (A'b) and the composition for layer (A'o), respectively, were kneaded in separate extruders, the temperature of which had been set at 240°C. They were then fed into a co-extrusion die, the temperature of which had been set at 260°C, where they were laminated (B/A'b/A'o) and then extruded into a sheet which was then cooled by a cooling device to obtain an unstretched three-layer film.
This film was reheated to 140°C, stretched longitudinally by a factor of 4, annealed at 160°C, subj ected to corona discharge treatment, and then slit at the edge thereof to obtain a three-layer (monoaxially-stretched/monoaxially-stretched/monoaxially-stretched) film (I) having a thickness of 60 μm (B/A'b/A'o = 4 μm/46 μm/10 μm), a peel strength of 200 g/cm and an opacity of 67%.
The results of the produced by of the film (I) are described in Table 4.

Table 3

| Production Example | | Base layer (A) | | | | | | | | | | Opacity (%) | Compressed thickness (μm) | Porosity (%) |
|---|---|---|---|---|---|---|---|---|---|---|---|---|---|---|
| | | Thickness (μm) | | | | Number of stretching axes | | | Filler concentration (%) | | | | | |
| | | Total | A2 | A1 | A3 | A2 | A1 | A3 | A2 | A1 | A3 | | | |
| Production Example | 1 | 54 | 4 | 46 | 4 | 2 | 2 | 2 | 1 | 25 | 0 | 90 | 22.4 | 40 |
| | 2 | 110 | 25 | 60 | 25 | 1 | 2 | 1 | 46 | 16 | 46 | 94 | 24.3 | 32 |
| | 3 | 65 | 15 | 35 | 15 | 1 | 2 | 1 | 40 | 3 | 40 | 30 | 9.6 | 5 |
| | 4 | 50 | 50 | | | 2 | | | 0 | 0 | 0 | 4 | 2.3 | 0 |

Table 4

| Production Example | | Film (I) | | | | | | | | | | Opacity (%) | Peel strength (Layer B side) (g/cm) |
|---|---|---|---|---|---|---|---|---|---|---|---|---|---|
| | | Thickness (μm) | | | | Number of stretching axes | | | Filler concentration (%) | | | | |
| | | Total | Layer B | Layer A' | | Layer B | Layer A' | | Layer B | Layer A' | | | |
| | | | | A'b | A'o | | A'b | A'o | | A'b | A'o | | |
| Production Example | 5 | 60 | 1 | 49 | 10 | 2 | 2 | 2 | 40 | 20 | 30 | 91 | 25 |
| | 6 | 80 | 1 | 49 | 30 | 2 | 2 | 1 | 40 | 20 | 20 | 88 | 40 |
| | 7 | 60 | 4 | 46 | 10 | 1 | 1 | 1 | 60 | 20 | 30 | 87 | 90 |
| | 8 | 60 | 4 | 46 | 10 | 1 | 1 | 1 | 60 | 20 | 30 | 67 | 200 |

EP 1 552 918 A1

[Preparation of transfer foil for gloss layer (C)]

(Production Example 9)

\*   Metal foil
    A commercially available vacuum aluminum-plated transfer foil (trade name: AFU Silver; thickness: 42 $\mu$m, produced by MURATA KINPAKU CO., Ltd.) was used as a transfer foil for gloss layer (C).

(Production Example 10)

\*   Hologram foil
    A commercially available hologram transfer foil (trade name: Hologram Pattern Film KP32; thickness: 74 $\mu$m, produced by Coburn Japan Corporation) was used as a transfer foil for gloss layer (C).

[Examples 1 to 3 and Comparative Examples 1 to 3]

[Formation of gloss layer (C)]

A mixture of a urethane-based adhesive "BLS- 2080A" produced by Toyo Morton Ltd., as an anchoring agent, and a curing agent "BLS-2080B" produced by Toyo Morton Ltd. was coated over the base layer (A) obtained in Production Example 1 on the (A2) side thereof and on one side of the base layers (A) obtained in Production Examples 2 to 4 in a dry amount of 1 g/m$^2$, and then dried.
Subsequently, the transfer foils obtained in Production Examples 9 and 10 were each transferred onto the anchoring agent-coating side of the aforementioned base layer (A) using a hot stamping press "MP-6A" produced by NAVITAS CO., LTD. to form a gloss layer (C). Fine characters were printed on the gloss layer (C) as pattern by UV offset printing method to obtain glossy films of Examples 1 to 3 of the present application and Comparative Examples 1 to 3. The results are described in Table 5.

[Testing Example]

A pressure-sensitive adhesive agent "Oribain BPS-1109" (trade name) produced by TOYO INK MFG. CO., LTD. was coated over a release paper (release paper (E)) having a thickness of 173 $\mu$m and a density of 0.9 g/cm$^3$ obtained by laminating a polyethylene film on the both sides of a high quality paper and subjecting one side thereof to a silicone treatment in an amount of 25 g/m$^2$ as calculated in terms of solid content. This was then dried to obtain a pressure-sensitive adhesive layer (adhesive layer (D)) on which the glossy films prepared in Examples 1 to 3 and Comparative Examples 1 to 3 were each then laminated in such an arrangement that it came in contact with the side of the glossy film opposite the gloss layer (C) to obtain a label having a glossy film/pressure-sensitive adhesive layer/ release paper laminated structure.

[Evaluation]

The opacity and porosity were measured and calculated by the aforementioned method. The results are described in Table 3.
For the measurement of compressed thickness, the pressure unit was attached to a Type Autograph AGS-5kND tensile tester (producedby Shimadzu Corporation). The thickness dislocation at a load of 32 kgf/cm$^2$ was then measured by a Type LK3100 CCD laser displacement (produced by KEYENCE CORPORATION). The results are described in Table 3.
The diffuse reflectance was determined by averaging the diffuse reflectance measured at various wavelengths ranging from 400 to 700 nm using a light trap according to JIS-Z8722.

(Ease of deformation during peeling)

The aforementioned labels were each cut into a square having a size of 5 cm x 5 cm. The release paper was then peeled off the label. The label was then stuck to glass. Thereafter, the label was peeled off the glass at one of the four sides thereof by hand. The ease of deformation of the glossy film during peeling was then evaluated as follows.

Ease of deformation

0: Good (Wrinkle on the glossy surface, remarkable unevenness in gloss and deformation of printed characters)
X: Poor (Little or no change of external appearance and deformation as compared with those before peeling)

The results are described in Table 5.

## Table 5

| Example/Comparative Example | Base (A) | | Gloss layer (C) | | Properties to be evaluated | |
|---|---|---|---|---|---|---|
| | Production Example | Thickness (μm) | Production Example | Thickness (μm) | Diffuse reflectance (%) | Ease of deformation during peeling |
| Example 1 | 1 | 54 | 9 | 42 | 20 | O |
| Example 2 | 1 | 54 | 10 | 74 | 35 | O |
| Example 3 | 2 | 110 | 10 | 74 | 35 | O |
| Comparative Example 1 | 3 | 65 | 9 | 42 | 20 | X |
| Comparative Example 2 | 3 | 65 | 10 | 74 | 35 | X |
| Comparative Example 3 | 4 | 50 | 10 | 74 | 35 | X |

EP 1 552 918 A1

[Examples 4 to 9 and Comparative Examples 4, 5]

[Formation of gloss layer (C)]

An anchoring agent was provided on the films (I) obtained in Production Examples 5 to 8 on the layer (A'o) side thereof in the same manner as in Examples 1 to 3. Subsequently, the transfer foils obtained in Production Examples 9 and 10 were each transferred to the films (I) in the same manner as in Examples 1 to 3 to form a gloss layer (C). Characters were printed as a pattern on the gloss layer (C) in the same manner as in Examples 1 to 3 to obtain glossy films of Examples 4 to 9 of the present application and Comparative Examples 4 and 5. Theresults are described in Table 6.

[Testing Example]

An adhesive layer (D) and a release paper (E) were laminated on the glossy films prepared in Examples 4 to 9 and Comparative Examples 4 and 5 on the side thereof opposite the gloss layer (C) in the same manner as in the aforementioned testing example to obtain a label having a glossy film/pressure-sensitive adhesive layer/release paper laminated structure.

[Evaluation]

The opacity and peel strength were measured by the aforementioned methods. The results are described in Table 4.
The diffuse reflectance and peeling starting stress were measured and calculated by the aforementioned methods. The results are described in Table 6.

(Peelability)

The various labels were each cut into a square having a size of 5 cm x 5 cm. The release paper was then peeled off the label. The label was then stuck to a government postcard which is assumed to be a paper card. Thereafter, the label was peeled off the postcard at one of the four sides thereof by hand. The conditions shown until the easily peelable layer (B) began to be peeled were then observed and evaluated as follows.

　　0: Good (Peeling soon begins)
　　X: Poor (10 mm or more is required until peeling begins)

Referring to the evaluation of peelability of Examples 4 to 9 and Comparative Examples 4 and 5, all these samples showed wrinkle on the glossy surface thereof and remarkable unevenness in gloss and deformation of printed characters and hence a good ease of deformation during peeling.

| Example/Comparative Example | Film (I) | | Gloss layer (C) | | Properties to be evaluated | | |
|---|---|---|---|---|---|---|---|
| | Production Example | Thickness (μm) | Production Example | Thickness (μm) | Diffused reflectance (%) | Peeling starting stress (g/cm) | Peel-ability |
| Example 4 | 5 | 60 | 9 | 42 | 20 | 70 | O |
| Example 5 | 5 | 60 | 10 | 74 | 35 | 60 | O |
| Example 6 | 6 | 80 | 9 | 42 | 20 | 85 | O |
| Example 7 | 6 | 80 | 10 | 74 | 35 | 80 | O |
| Example 8 | 7 | 60 | 9 | 42 | 20 | 260 | O |
| Example 9 | 7 | 60 | 10 | 74 | 35 | 210 | O |
| Comparative Example 4 | 8 | 60 | 9 | 42 | 20 | 540 | X |
| Comparative Example 5 | 8 | 60 | 10 | 74 | 35 | 510 | X |

EP 1 552 918 A1

While the present invention has been described in detail and with reference to specific embodiments thereof, it will be apparent to one skilled in the art that various changes and modifications can be made therein without departing from the spirit and scope thereof.

The present application claims priority to Japanese Patent Application No. 2002-209128 filed on July 18, 2002 and Japanese Patent Application No. 2002-379715 filed on December 27, 2002, the contents of which are hereby incorporated by reference in their entireties.

<Industrial Applicability>

The glossy film of the present invention can be deformed by a small force without requiring any special working for starting peeling and thus can be visually recognized for peeling from the change of external appearance after peeling and used for purposes such as re-covering preventive label and alteration preventive label. In addition, the glossy film of the present invention, if it has an easily peelable layer provided thereon, can be effectively used for various purposes such as delivery slip capable of being peeled leaving no paste behind, secret seal for postcard or passbook, application seal and coupon.

**Claims**

1. A glossy film comprising: a base layer (A) containing a thermoplasic resin and having a compressed thickness of 12 µm or more at a load of 32 kgf/cm$^2$ in the thickness direction and a porosity of from 10 to 60%; and a gloss layer (C).

2. The glossy film as described in Claim 1, wherein the opacity of the base layer (A) is from 60 to 100%.

3. The glossy film as described in Claim 1 or 2, wherein the thickness of the base layer (A) is from 20 to 500 µm.

4. The glossy film as described in any of Claims 1 to 3, wherein the base layer (A) has a multi-layer structure.

5. The glossy film as described in any of Claims 1 to 4, wherein the base layer (A) comprises a layer which is stretched in at least one axial direction.

6. A glossy film comprising: a film (I) comprising a base layer (A') containing a thermoplastic resin and an easily peelable layer (B) having a peel strength of from 5 to 150 g/cm width; and a gloss layer (C), wherein the gloss layer (C) is provided on at least one surface of the film (I).

7. The glossy film as described in Claim 6, wherein the base layer (A') has a compressed thickness of 12 µm or more at a load of 32 kgf/cm$^2$ in the thickness direction and a porosity of from 10 to 60%.

8. The glossy film as described in Claim 6 or 7, wherein the easily peelable layer (B) comprises: at least one of finely divided inorganic powder and organic filler in an amount of from 10 to 80% by weight; and a thermoplastic resin in an amount of from 20 to 90% by weight.

9. The glossy film as described in any one of Claims 6 to 8, wherein the opacity of the film (I) is from 60 to 100%.

10. The glossy film as described in any one of Claims 6 to 9, wherein the thickness of the base layer (A') is from 20 to 500 µm and the thickness of the easily peelable layer (B) is from 0.1 to 100 µm.

11. The glossy film as described in any one of Claims 6 to 10, wherein the easily peelable layer (B) is provided by a coating method.

12. The glossy film as described in any one of Claims 6 to 10, wherein the base layer (A') and the easily peelable layer (B) are stretched in at least one axial direction after lamination.

13. The glossy film as described in any one of Claims 6 to 12, wherein the base layer (A') has a multi-layer structure comprising: a layer (A'b) provided on the side thereof in contact with the easily peelable layer (B); and a layer (A'o) provided on the side thereof opposite to the easily peelable layer (B), the layer (A'b) comprises: at least one of finely divided inorganic powder and organic filler in an amount of from 2 to 60% by weight; and a thermoplastic resin in an amount of from 40 to 98% by weight, the layer (A'o) comprises a thermoplasticresin in an amount of from 20 to 100% by weight, and the content of the finely divided inorganic powder and organic filler in the layer (A'b) is less, by not less than 8% by weight, than that of the easily peelable layer (B).

14. Theglossyfilmas described in any one of Claims 1 to 13, wherein the base layer (A) or base layer (A') comprises a thermoplastic resin containing at least one of polyolefin-based resin and polyester-based resin.

15. The glossy film as described in any one of Claims 1 to 14, wherein the gloss layer (C) is formed by one or more of direct vacuum metallization, transfer vacuum metallization, metal foil transfer, coating of metal powder-containing coating solution, coating of pearl pigment-containing coating solution and method of exposing a photosensitive resin to interference band to develop, and the gloss layer (C) has a diffuse reflectance of from 0 to 70% and a thickness of from 0.02 to 100 $\mu$m.

16. The glossy film as described in anyone of Claims 1 to 15, wherein at least one of character, image and pattern is formed on the gloss layer (C) directly or via at least one of easily adhesive layer and worked layer, by one or more of handwriting, printing, computer printing, engraving, laser working, embossing and hologram processing.

17. A label having a adhesive layer (D) provided on the side opposite to the gloss layer (C) of the glossy film as described in any one of Claims 1 to 16.

18. The label as described in Claim 17, wherein a release paper (E) is provided on the adhesive layer (D).

19. The label as described in Claim 17 or 18, having a peel starting stress of 500 g/cm width or less.

## INTERNATIONAL SEARCH REPORT

| | International application No. |
|---|---|
| | PCT/JP03/09183 |

A. CLASSIFICATION OF SUBJECT MATTER
  Int.Cl⁷  B32B5/18, G09F3/00

According to International Patent Classification (IPC) or to both national classification and IPC

B. FIELDS SEARCHED

Minimum documentation searched (classification system followed by classification symbols)
  Int.Cl⁷  B32B1/00-35/00, G09F3/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 02/02312 A1 (Yupo Corp.),<br>10 January, 2002 (10.01.02),<br>Claims; page 8, lines 8 to 10<br>& EP 1306206 A  & JP 14-113817 A | 1-19 |
| X | JP 10-258476 A (Oji Yuka Goseishi Kabushiki Kaisha),<br>28 September, 1998 (28.09.98),<br>Claims; Par. No. [0013]<br>(Family: none) | 1-19 |
| X | JP 8-30202 A (Osaka Sealing Printing Co., Ltd.),<br>02 February, 1996 (02.02.96),<br>(Family: none) | 6,8-11,14-19 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 October, 2003 (15.10.03) | 28 October, 2003 (28.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 552 918 A1**

<table>
<tr><td colspan="2" align="center">**INTERNATIONAL SEARCH REPORT**</td><td>International application No.<br>PCT/JP03/09183</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| X | WO 02/22356 A1 (Yupo Corp.),<br>21 March, 2002 (21.03.02),<br>& AU 8627101 A      & JP 14-160478 A<br>& JP 14-160318 A      & JP 14-187387 A<br>& JP 14-200686 A      & JP 14-219760 A | 1-5,14-16 |

Form PCT/ISA/210 (continuation of second sheet) (July 1998)